Europäisches Patentamt

European Patent Office

Office européen des brevets

(11) Publication number: **0 338 740**
**A2**

## (12) EUROPEAN PATENT APPLICATION

(21) Application number: **89303748.1**

(22) Date of filing: **14.04.89**

(51) Int. Cl.⁴: **F16F 13/00 , F16F 9/46**

(30) Priority: **16.04.88 JP 94375/88**

(43) Date of publication of application:
**25.10.89 Bulletin 89/43**

(84) Designated Contracting States:
**DE GB**

(71) Applicant: **NISSAN MOTOR CO., LTD.**
**No.2, Takara-cho, Kanagawa-ku**
**Yokohama City(JP)**

(72) Inventor: **Sato, Shigeki**
**No. 3-68, Oppamahigashi-cho**
**Yokosuka City(JP)**

(74) Representative: **Whalley, Kevin et al**
**MARKS & CLERK 57/60 Lincoln's Inn Fields**
**London WC2A 3LS(GB)**

(54) Vibration damping device suitable for supporting vibrating bodies and method of control therefor.

(57) A vibration damping device comprises an elastomeric body (24) interposed between a first body such as a vehicle chassis (12) and a second body such as a power unit (14) which is subject to vibration, there being an orifice passage (40c) connecting a main working chamber (32) to an auxiliary chamber (36) and having electrodes (40a, 40b) via which a voltage can be impressed on an ERF which fills said main and auxiliary chambers, and first and second acceleration sensors (48, 50) for sensing acceleration of the first and second bodies and producing first and second signals respectively, and a control circuit (46) responsive to said signals.

The acceleration of the base or chassis is sensed and differentiated. The differential value is compared with a given level and used to set a control value against which the absolute value of the acceleration of the suspended body is compared. Depending on the outcome of the second comparison a voltage is selectively applied to the electrodes of the orifice included in the vibration damping device.

FIG.1

## VIBRATION DAMPING DEVICE SUITABLE FOR SUPPORTING VIBRATING BODIES AND METHOD OF CONTROL THEREFOR

The present invention relates generally to mounting devices of the nature used to support vibrating bodies, and more specifically to vibration damping mounting device which is compact and particularly suited to automotive applications.

JP-A-60-104828 describes an example of damping type unit which takes the form of a hollow elastomeric bush member filled with an electrorheogical fluid (or ERF as it will be referred to hereinafter) and which is further provided with an electrically controlled orifice unit which divides the device into a working chamber and an expansion chamber. With this device, when the bush is compressed, fluid is displaced from the working chamber into the auxiliary one (defined between the orifice unit and a relative flexible diaphragm) and vice versa. By applying a high voltage across the electrodes of the orifice, the viscosity of the ERF can be induced to undergo a remarkable increase and the fluid in the orifice passage induced to assume to an almost solid state. Under these conditions the orifice is either effectively blocked or the restrictive properties thereof remarkably increased.

In previously proposed control arrangements for the above type of damping device, the difference in the amount of relative displacement between the side of the device which supports the vibrating body and the side on which the device is supported on a base, has been determined and this data along with the individual accelerations, has been subject to various mathematical processes such as integration, division, multiplication, etc in order to derive the appropriate timing to apply voltages to the orifice electrodes.

However, even though only a very short period of time is required for the calculations, by the time the appropriate voltage signal or signals are applied and have subsequently taken effect, a relatively long delay has occurred which reduces the damping effect of the device.

Experiments conducted have revealed that, in order to overcome the above described problem, it is possible to use a prediction method wherein the wave shape of the vibrations are monitored, using the accelerations induced by the applied and received vibrations. This technique as used these accelerations to estimate the timing with which the voltages should be impressed on the orifice electrodes in order to avoid the delay encountered with the above mentioned prior art.

It has also been found that while this technique renders it possible to achieve marked improvements in the vibration damping which can be achieved, if the estimation of the level of vibration peak is in excess of the actual value, the damping efficiency of the device is reduced.

Accordingly, it is an object of the present invention to provide an improved control arrangement which features a prediction technique which enables the full benefit of the electrically controlled orifice arrangement to be realized.

In brief, the above object is achieved by an arrangement wherein the acceleration of the base or chassis is sensed and differentiated. The differential value is compared with a given level and used to set a control value against which the absolute value of the acceleration of the suspended body is compared. Depending on the outcome of the second comparison a voltage is selectively applied to the orifice electrodes.

More specifically, a first aspect of the present invention is deemed to come in a device which features: an elastomeric body interposed between a first body which supports the elastomeric body and a second body which is which is subject to vibration; means defining a main working chamber which undergoes a change in volume when the elastomeric body is subject to distortion in accordance with the relative displacement between the first body and the second body; an orifice passage interconnecting the main working chamber to an auxiliary chamber, the orifice having electrodes via which a voltage can be impressed on an ERF which fills the main and auxiliary chambers; a first acceleration sensor for sensing the acceleration of the first body and producing a first signal indicative thereof; a second acceleration sensor for sensing the acceleration of the second body and producing a second signal indicative thereof; a control circuit, the control circuit being responsive to the first and second signals and including a source of voltage, the control circuit including means for: differentiating the output of the first signal to produce a third signal; comparing the absolute value of the third signal with a predetermined value; deriving a control value using the first signal when the absolute value of the third signal is less than the predetermined value; comparing the absolute value of the second signal with the control value; and impressing a voltage across the electrodes when the absolute value of the second signal is equal to or greater than the control valve.

A second aspect of the present invention is deemed to comprise a method of controlling a device which includes an elastomeric body interposed between a first body which supports the elastomeric body and a second body which is which is subject to vibration; means defining a main working chamber which undergoes a change in volume when the elastomeric body is subject to distortion in accordance with the relative displacement between the first body and the second body; an orifice passage interconnecting the main working chamber to an auxiliary chamber, the orifice having electrodes via which a voltage can be impressed on an ERF which fills the main and auxiliary chambers; a first acceleration sensor for sensing the acceleration of the first body and producing a first signal indicative thereof; a second acceleration sensor for sensing the acceleration of the second body and producing a second signal indicative thereof; and a control circuit, the control circuit being responsive to the first and second signals and including a source of voltage, the method featuring the steps of: differentiating the output of the first signal to produce a third signal; comparing the absolute value of the third signal with a predetermined value; deriving a control value using the first signal when the absolute value of the third signal is less than the predetermined value; comparing the absolute value of the second signal with the control value; and impressing a voltage across the electrodes when the absolute value of the second signal is equal to or greater than the control valve.

Fig. 1 is a sectional elevational view of an ERF filled bush which is equipped with a control arrangement according to the present invention;

Fig. 2 is a diagram which shows, in flow chart-like form, the basic control steps implemented in accordance with the present invention;

Fig. 3 is a chart which shows, in terms of time and acceleration, the control characteristics which are provided with a control technique according to a first embodiment of the present invention;

Fig. 4 is a graph which shows, in terms of acceleration level and time, the manner in which the characteristic value, which is calculated using the first embodiment, is used as slice level to control the energization timing of the electronically controlled orifice;

Fig. 5 is a chart which shows, in terms of time and acceleration, the control characteristics which are provided with a control technique according to a second embodiment of the present invention; and

Fig. 6 is a chart which compares, in terms of vibration transmission ratio and frequency, the vibration attenuation characteristics of the first and second embodiments and two other arrangements.

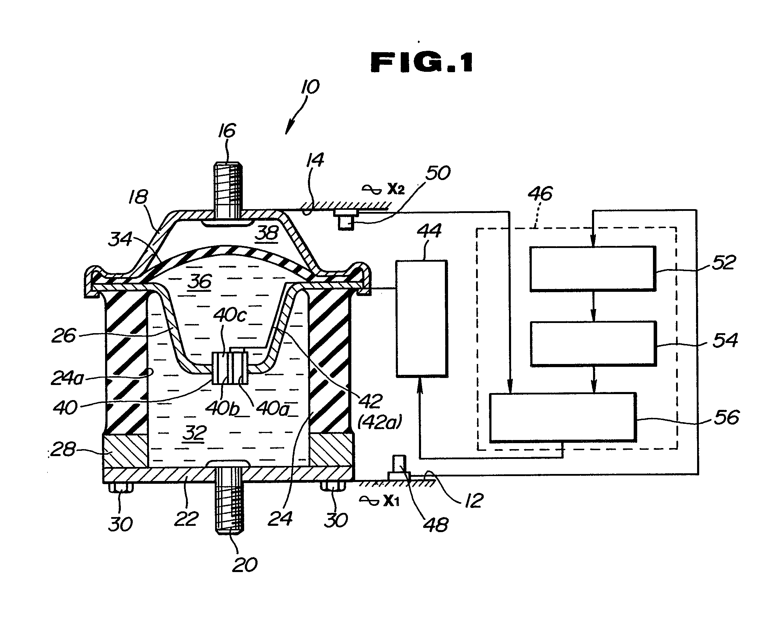

The arrangement shown in Fig. 1 includes an engine mount 10 which is operatively connected between a vehicle chassis 12 and power unit 14. In this instance, the power unit comprises an engine or and engine and transmission combination (e.g. transaxle unit).

It should, however, be noted at this point of the disclosure that the present invention is not limited to this particular combination and can find application in any situation wherein a vibrating body which exhibits a variety of vibrational characteristics needs to be supported on a base or the like.

A first connection bolt 16 projects from the upper portion of a first or upper bracket 18 while a second connection bolt projects from the second or lower bracket 22. As will be appreciated, these bolts permit the mount to be detachably connected to the power unit and chassis respectively.

A hollow elastomeric body or insulator 24 is disposed between the upper and lower brackets and connected thereto by way of a cup-shaped member 26 which is vulcanized to the upper portion of the elastomeric body 24 and an annular member 28 is vulcanized to the lower end of the body 24. The annular member 28 is secured to the lower bracket by bolts 30 while the cup-shaped member 26 is connected to the upper bracket by an inwardly extending flange which is crimped about the outer periphery of the cup-like member 26.

A flexible diaphragm 34 is sandwiched in place between the upper bracket 18 and the upper portion of the cup-shaped member 26 in the manner shown.

A main working chamber is defined within the hollow elastomeric member 24 by the cup-shaped member while an auxiliary chamber is defined within the cup-shaped member by the flexible diaphragm 34.

An orifice passage arrangement 40 is formed in the cup-shaped member 26. In this instance the orifice arrangement includes a single annular member which acts as a first electrode 40a and a shaft-like member which extends essentially coaxially through the annular member 40a and which acts as a second electrode 40b. An annular orifice passage 40c is defined between the two electrodes.

The main and auxiliary chambers 32 and 36 are filled with an ERF.

Lead lines 42 and 42a establish electrical connection between the electrodes 40a, 40b and a power supply circuit 44. This power supply circuit 44 is arranged to selectively impress a high voltage across the electrodes 40a, 40b.

A control circuit 46 is operatively connected with the power supply circuit and arranged to control the ON/OFF timing with which the high voltage is applied to the electrodes.

First and second accelerometers 48, 50 are operatively connected with the chassis and the power unit at locations where the acceleration which is induced the applied and received vibrational energies can be detected and measured. These accelerometers are operatively connected with the control circuit 46 in manner wherein the output of the sensor 48 $\overline{x}$ 1 is supplied to an acceleration peak detection circuit 52 while the output of the sensor 50 $\overline{x}$ 2 is supplied to a switching level comparator circuit 56. The acceleration peak detection circuit and the switching level comparator circuit are operatively connected by a switching level setting circuit 54.

The switching level comparator circuit 56 is operatively connected with the power supply circuit 44 as shown.

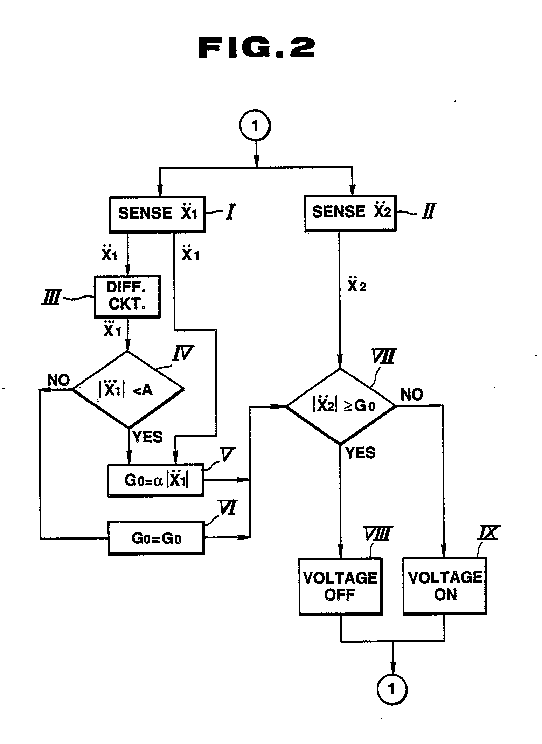

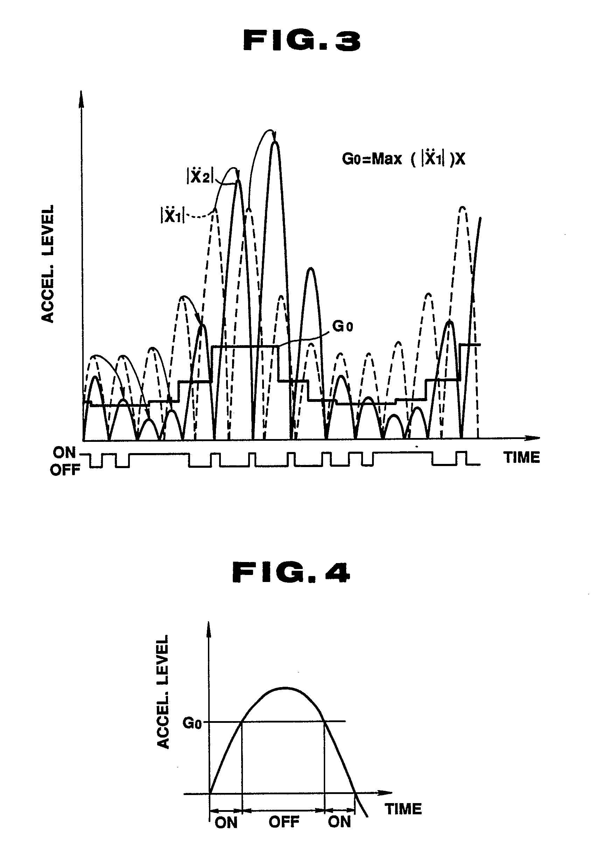

Fig. 2 shows in flow chart form, the operations performed by a algorithm which is arranged to control the operation of the controller 46. Fig. 3 shows an example of the vibration characteristics and the resulting control which occurs in accordance with the first embodiment of the present invention.

Firstly, at steps I and II the accelerometers, 48 and 50 sense the acceleration of the chassis and the power unit and output signals $\overline{x}$ 1, $\overline{x}$ 2 indicative of the same.

At this point it should be should be noted that in Fig. 3 the chain line traces denote the acceleration level of the chassis while the solid line traces denote the acceleration level of the power unit 14.

The output of the accelerometer 48 is fed to a differential circuit in step III wherein the third differential $\overline{x}$ 1 is generated and outputted to a comparator (step IV). The absolute value of $\overline{x}$ 1 instant acceleration is compared with a predetermined value A (in this instance A is set at approximately zero). In the case that the instant value of the third derivative $\overline{x}$ 1 is less than A it is indicated that the value of the second derivative has maximized (reached a peak) and the process flows to step V.

On the other hand, if the outcome of the comparison is such as to indicate that the value of the third derivative is equal to or greater than A then it is deemed that the acceleration of the chassis is between peaks and the process flows from step IV to step VI.

The level setting circuit 54 shown in Fig. 1 is arranged to included circuits which perform steps V and VI.

In step V a predetermined switching level Go is determined using the following equation:
$$Go = Max \, |\overline{x} \, 1| \times œ \, 1 \quad (1)$$
Wherein œ is a predetermined constant which this instance is set so as to be approximately equal to 0.4.

The instant level of Go is installed in memory for use at steps VI and VII. The value is updated each time the process flows from step IV to step V.

The value of Go which is derived using the above process is indicated by the stepped solid line trace in Fig. 3.

Fig. 4 shows the use of the value Go as a variable slice level via which the ON/OFF timing of the voltage impression on the electrodes 40a and 40b, is determined. For any given single vibration produced by the power unit the ON time and OFF time induced by the above control is distributed in an approximately 50/50 manner.

The value of the second derivative $\overline{x}$ 2 is determined in step II is supplied to a comparator circuit in sep VII wherein the absolute value of the same (| $\overline{x}$ 2|) is compared with the most recently recorded value of Go (determined in step V).

In the event that the acceleration of the power unit 14 is equal to or greater than Go, then the process flows to step VIII wherein the impression of voltage on the electrodes is prevented. In the case the outcome of the comparison in step VII is negative then the process flows to step IX where voltage is impressed across the electrodes 40a, 40b.

In other words, the operation of comparing the acceleration level of the power unit with the current value of Go, which is carried out in step VII, defines a simple technique via which the relationship between the maximum and minimum values of the signal to be derived in an extremely short period of time. This permits the timing with which the electrodes are energized to be change in a manner whereby the timing of the changes of viscosity of the ERF in the orifice passage 40c is such as to greatly improve the reduction in the vibration transmission ratio.

Further, by using the switching level Go based on the level of the signal produced by the accelerometer 48 which is mounted on the chassis 12, the peak of the the signal $\overline{x}$ 2 produced by the accelerometer which is mounted on the power unit 14 can be anticipated. As the level of Go changes with the actual level of the output of the accelerometer ( $\overline{x}$ 1), deviations in prediction accuracy can be obviated and thus assure the optimum operation of the device which is controlled in accordance with the present invention.

It should be noted that with the first embodiment the value of Go is derived using equation (1) wherein the value of œ 1 is fixed, it is possible, according to a second embodiment of the present invention, to use the square of | $\overline{x}$ 1| and a constant œ 2 (where œ 2 = 0.0000626) to anticipate the peak value of | $\overline{x}$ 2|.

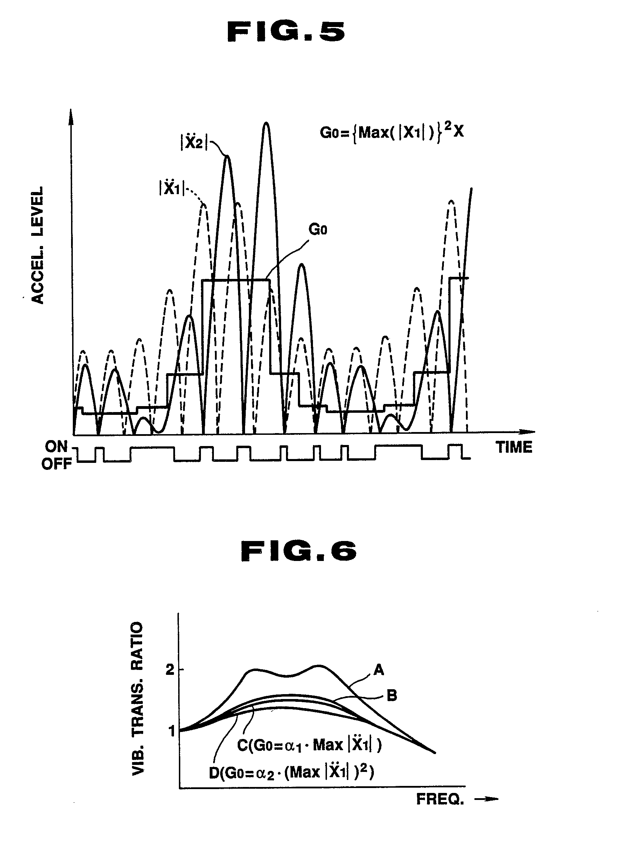

Viz., derive Go using equation 2.
$$Go = ( Max \, | \overline{x} \, 1| )^2 \times œ \, 2 \quad (2)$$
Figs. 4 and 5 show the control characteristics which are induced using the technique according to the second embodiment of the present invention. As will be noted, the changes in the Go value are notably increased with respect to the correspond-

ing changes in $\overline{x}1$ value and thus improve the anticipation of the peak $\overline{x}2$ values.

In Fig. 6 trace A denotes the vibration transmission ratio attenuation which is achieved using a mount which is controlled in a conventional manner; trace B denotes the attenuation when a fixed Go value is used; trace C denotes the control which results when Go is derived using equation (1); and trace D indicates the results derived when Go is derived using equation (2).

## Claims

1. A device comprising:
an elastomeric body (24) interposed between a first body which supports the elastomeric body and a second body which is subject to vibration;
means defining a main working chamber (32) which undergoes a change in volume when said elastomeric body is subject to distortion in accordance with the relative displacement between said first body and said second body;
an orifice passage (40c) interconnecting the main working chamber to an auxiliary chamber (36), said orifice having electrodes (40a, 40b) via which a voltage can be impressed on an ERF which fills said main and auxiliary chambers;
a first acceleration sensor (48) for sensing the acceleration of said first body and producing a first signal indicative thereof;
a second acceleration sensor (50) for sensing the acceleration of said second body and producing a second signal indicative thereof;
a control circuit (46), said control circuit being responsive to said first and second signals and including a source of voltage, said control circuit including means for:
differentiating the output of said first signal to produce a third signal;
comparing the absolute value of said third signal with a predetermined value;
deriving a control value using said first signal when the absolute value of said third signal is less than said predetermined value;
comparing the absolute value of said second signal with said control value; and
impressing a voltage across said electrodes when the absolute value of said second signal is equal to or greater than said control valve.

2. A device as claimed in claim 1, characterized in that said control circuit further includes means for deriving said control value by multiplying the absolute value of said first signal with a predetermined constant.

3. A device as claimed in claim 1, characterized in that said control circuit further includes means for deriving said control value by multiplying the square of the absolute value of said first signal with a predetermined constant.

4. A method of controlling a device comprising an elastomeric body (24) interposed between a first body which supports the elastomeric body and a second body which is subject to vibration;
means defining a main working chamber (32) which undergoes a change in volume when said elastomeric body is subject to distortion in accordance with the relative displacement between the said first body and said second body;
an orifice passage (40c) interconnecting the main working chamber to an auxiliary chamber (36), said orifice having electrodes (40a, 40b) via which a voltage can be impressed on an ERF which fills said main and auxiliary chambers;
a first acceleration sensor (48) for sensing the acceleration of said first body and producing a first signal indicative thereof;
a second acceleration sensor (50) for sensing the acceleration of said second body and producing a second signal indicative thereof; and
a control circuit (46), said control circuit being responsive to said first and second signals and including a source of voltage, the method comprising the steps of:
differentiating the output of said first signal to produce a third signal;
comparing the absolute value of said third signal with a predetermined value;
deriving a control value using said first signal when the absolute value of said third signal is less than said predetermined value;
comparing the absolute value of said second signal with said control value; and
impressing a voltage across said electrodes when the absolute value of said second signal is equal to or greater than said control valve.

5. A method as claimed in claim 4, characterized in that said step of deriving said control value includes multiplying the absolute value of said first signal with a predetermined constant.

6. A method as claimed in claim 4, characterized in that said step of deriving said control valve includes multiplying the square of the absolute value of said first signal with a predetermined constant.

EP 0 338 740 A2

FIG.1

# FIG.2

① 

SENSE $\ddot{X}_1$ —$I$          SENSE $\ddot{X}_2$ —$II$

$\ddot{X}_1$     $\ddot{X}_1$          $\ddot{X}_2$

$III$  DIFF. CKT.

$\dddot{X}_1$

$IV$

NO   $|\dddot{X}_1| < A$           $VII$   $|\ddot{X}_2| \geq G_0$   NO

YES                                YES

$G_0 = \alpha |\ddot{X}_1|$ —$V$

$G_0 = G_0$ —$VI$

$VIII$  VOLTAGE OFF          VOLTAGE ON —$IX$

①

# FIG. 3

$G_0 = Max \ ( \ |\ddot{X}_1| \ )X$

ACCEL. LEVEL

$|\ddot{X}_2|$

$|\ddot{X}_1|$

$G_0$

ON
OFF

TIME

# FIG. 4

ACCEL. LEVEL

$G_0$

ON    OFF    ON    TIME

# FIG.5

$G_0 = \{Max(|\ddot{X}_1|)\}^2 X$

# FIG.6

$C(G_0 = \alpha_1 \cdot Max |\ddot{X}_1|)$

$D(G_0 = \alpha_2 \cdot (Max |\ddot{X}_1|)^2)$